# EUROPÄISCHE PATENTSCHRIFT

(11) **EP 2 784 725 B1**
(45) Veröffentlichungstag und Bekanntmachung des Hinweises auf die Patenterteilung: **23.03.2016**
(21) Anmeldenummer: 14162512.9
(22) Anmeldetag: 28.03.2014
(51) Int. Cl.: G06K 19/07, G06K 19/073, A22B 5/00, A22B 7/00

(54) **Vorrichtung zum Markieren eines Schlachttierkörpers**
Device for marking an animal carcass
Dispositif de marquage d'une carcasse

(30) Priorität: 28.03.2013 DE 102013205732
(43) Veröffentlichungstag der Anmeldung: 01.10.2014
(73) Patentinhaber: Deutsches Institut für Lebensmitteltechnik e.V., 49610 Quakenbrück (DE); SLA Software Logistik Artland GmbH, 49610 Quakenbrück (DE)
(72) Erfinder: Hukelmann, Bernhard, 49610 Quakenbrück (DE); Brezl, Jörg, 49610 Quakenbrück (DE)
(74) Vertreter: Taruttis, Stefan Georg

(56) Entgegenhaltungen:
- WO-A1-2005/111925
- DE-A1-102012 104 186

## Beschreibung

Die vorliegende Erfindung betrifft eine Vorrichtung und ein Verfahren zum Markieren eines Schlachttierkörpers, die insbesondere für das Halten, den Transport und/oder die Markierung von Schlachttierkörpern geeignet sind, wobei diese irreversibel und eindeutig durch die Vorrichtung markiert werden.

### Stand der Technik

Die DE102012104186 A1 beschreibt ein Kennzeichnungselement mit einem Transponder, der an einem von zwei miteinander verrastbaren Teilen angebracht ist. Die verrastbaren Teile können mit einem Draht verbunden sein und die Vorrichtung kann einen Verbindungsdraht aufweisen, der eine leitende Verbindung mit dem Draht eingehen kann, der die beiden Teile verbindet, wenn diese miteinander verrastet sind, und die leitende Verbindung kann messtechnisch erfasst werden.

Die WO 2005/111925 beschreibt als Nachweis für die Anwesenheit einer Last, z.B. in einem Karton, einen RFID-Chip, der mit seiner Antenne über einen druckempfindlichen Schalter verbunden ist.

Die US 6452497 B1 beschreibt einen Fleischerhaken, der anstelle einer Nummer oder eines Strichcodes einen Transponder zur Identifizierung des Hakens aufweist, der innerhalb einer Bohrung des Hakens in einem fest verschlossenen Gehäuse angeordnet ist.

Die DE 10345634 B3 beschreibt einen Fleischerhaken, der dadurch einen größeren Abstand zum Auslesen des darin enthaltenen Transponders zulässt, dass zwischen der Bohrung, in der der Transponder angeordnet ist, und dem Rand des Fleischerhakens ein Spalt angebracht ist. Dieser Spalt in dem Schlachterhaken, der ansonsten aus Metall besteht, verringert die Induktion von Wirbelströmen in dem Haken beim Auslesen des Transponders. Der Spalt kann mit Epoxidharz vergossen sein. Die bekannten Fleischerhaken mit Transponder sind insofern nachteilig, als die mechanische Zuordnung des Transponders zu einem an dem Haken angebrachten Schlachttierkörper reversibel ist.

### Aufgabe der Erfindung

Der Erfindung liegt die Aufgabe zugrunde, eine alternative Vorrichtung und ein alternatives Verfahren zum Transport mit der Vorrichtung zur Markierung von Schlachttierkörpern bereitzustellen, wobei insbesondere die Zuordnung der Markierung, insbesondere eines Transponders, zum Schlachttierkörper irreversibel ist.

### Beschreibung der Erfindung

Die Erfindung löst die Aufgabe mit den Merkmalen der Ansprüche und insbesondere durch eine Vorrichtung mit einer Fixiereinrichtung, die zur irreversiblen Befestigung an einem Schlachttierkörper eingerichtet ist, insbesondere an der Schmalstelle des Beins, wobei die Fixiereinrichtung zwei in einer Relativbewegung gegeneinander bewegliche Rast- oder Riegelelemente aufweist und einen Transponder, der durch ein Leitelement mit einem Auslöser gekoppelt ist. Der Transponder weist einen Speicher bzw. Chip auf und eine Antenne, wobei bevorzugt der Auslöser mittels des Leitelements mit der Antenne des Transponders verbunden ist. Das Leitelement kann z.B. ein elektrischer oder optischer Leiter oder ein mechanisches Kopplungselement sein.

Der Transponder ist eingerichtet, erst nach Empfang eines durch den Auslöser erzeugten Auslösesignals irreversibel mit Identifikationsmerkmalen beschreibbar zu sein. Dies wird dadurch erreicht, dass der Auslöser in einem ersten Zustand die elektrische Verbindung der Antenne zum Chip bzw. Speicher verhindert und durch Betätigung, insbesondere durch die Bewegung der Rastelemente in eine Verrastungsstellung, in einen zweiten Zustand bringbar ist, in dem der Auslöser die elektrische Verbindung der Antenne zum Chip bzw. Speicher bzw. die funktionsfähige Kopplung der Antenne mit dem Speicher herstellt. Dies ist insbesondere dann bevorzugt, wenn der Transponder keine eigene Energiequelle aufweist bzw. nur durch seine Antenne mit Energie beaufschlagbar ist.

Bevorzugt kann der Auslöser eingerichtet sein, die Antenne des Transponders erst durch Betätigung des Auslösers mit dem Chip bzw. Speicher des Transponders funktionsfähig zu verbinden bzw. mit Energie zu versorgen. Z.B. ist der Auslöser daher eingerichtet, die Antenne zum Empfang freizugeben, z.B. wenn der Auslöser eine die Antenne zumindest teilweise überdeckende Metallfolie oder Faraday'scher Käfig ist, oder der Auslöser ist eingerichtet, einen Kurzschluß der Antenne zu unterbrechen, z.B. wenn der Auslöser als einen ersten Anteil eine Kurzschlußleitung und einen zweiten Anteil zur Unterbrechung der Kurzschlußleitung aufweist, oder der Auslöser ist eingerichtet, eine Unterbrechung in der Antenne oder in einem Leitelement zu überbrücken, das die Antenne mit dem Chip bzw. Speicher des Transponders verbindet, z.B. wenn der Auslöser als einen ersten Anteil eine Unterbrechung aufweist und als einen zweiten Anteil ein Element, z.B. ein Kontaktstück, das die Unterbrechung schließt.

Die Vorrichtung ist zur Verwendung als irreversible Markierungsvorrichtung für Schlachttierkörper geeignet, weil der Transponder erst nach Änderung des Auslösers in seinen zweiten Zustand beschreibbar ist, der beim Fixieren der Vorrichtung am Tierkörper mittels des Auslösers erzeugt wird. Dadurch wird die Zuordnung des Transponders bzw. der dem Transponder übermittelten und im Transponder gespeicherten Identifikationsmerkmale zu dem in der Fixiereinrichtung irreversibel befestigten Schlachttierkörper irreversibel.

Die Vorrichtung ist daher durch den Auslöser dazu eingerichtet, dass der Transponder, beispielsweise ein RFID - Chip, nur nach Betätigung des Auslösers, bzw. nach Erzeugung eines Auslösesignals, das z.B. in der Änderung der optischen und/oder elektrischen Eigenschaft des Auslösers in einen zweiten Zustand ist, mit Identifikationsmerkmalen beschreibbar zu sein. Generell ist der Transponder im ersten Zustand nicht beschreibbar und wird erst durch das mittels des Leitelements übermittelte Auslösesignal in einen zweiten Zustand gebracht, in dem er beschreibbar ist. Der Auslöser ist dazu eingerichtet, den Transponder mittels des Auslösesignals aus dem ersten Zustand in einen zweiten Zustand zu bringen, in dem er beschreibbar ist. Ohne Empfang des Auslösesignals bzw. ohne Betätigung des Auslösers ist der Transponder in der Vorrichtung in einen ersten Zustand, in dem er nicht beschreibbar ist. Das Auslösesignal kann z.B. eine Änderung einer optischen und/oder elektrischen Eigenschaft des Auslösers in einen zweiten Zustand sein, in dem die Antenne des Transponders nicht gegen den Empfang abgedeckt ist oder in dem die Antenne funktionsfähig, insbesondere nicht kurzgeschlossen, mit dessen Chip bzw. Speicher verbunden ist. Bevorzugt ist der Transponder, der ein aktiver oder passiver sein kann, insbesondere ein RFID-Tag, einer gemäß internationalem Standard "EPC Radio-Frequency Identity Protocols Class-1 Generation-2 UHR RFID Protocol for Communications at 860-960 MHz" oder nachfolgender Standards und Normen.

Die Fixiereinrichtung, die z.B. zwei relativ zueinander bewegliche Rastelemente aufweist, umfasst vorzugsweise Rastelemente, die irreversibel in eine Verrastungsposition beweglich sind. Bevorzugt umfasst die Fixiereinrichtung in der Verrastungsposition einen Abschnitt des Schlachttierkörpers nur umfänglich, so dass Beschädigungen der Oberfläche des Schlachttierkörpers vermieden werden und das Eindringen von Keimen in den Schlachttierkörper an dem Abschnitt der Fixiereinrichtung vermieden wird. Bevorzugt weist die Vorrichtung eine Ausnehmung auf, mit der sie an einem herkömmlichen Fleischerhaken eingehängt werden kann, z.B. eine Öse. In dieser Ausführungsform erlaubt die Vorrichtung den Transport von Schlachttierkörpern mittels herkömmlicher Fleischerhaken ohne eine Beschädigung der Oberfläche des Schlachttierkörpers dadurch, dass die Vorrichtung wie eine Manschette umfänglich geschlossen am Schlachttierkörper fixiert ist und eine Verbindung zum Fleischerhaken herstellt.

Generell sind die Rastelemente relativ gegeneinander beweglich und zur irreversiblen Verrastung mit dem Schlachttierkörper und/oder miteinander eingerichtet. Die Verrastung ist dadurch irreversibel, dass sie nicht ohne erkennbare Manipulation der Vorrichtung, bevorzugt nicht zerstörungsfrei lösbar ist. Zumindest ein Rastelement ist beweglich geführt, z.B. in einem Schwenklager, und/oder hinreichend elastisch, um in eine Verrastungsposition mit einem weiteren Rastelement beweglich zu sein. Die Rastelemente können z.B. Hebel oder Streifen sein. Zur irreversiblen Verrastung können die Rastelemente z.B. unzugänglich gekapselt sein.

Erfindungsgemäß ist das Auslösesignal ein Signal oder ein zweiter Zustand, das bzw. der einmal durch den Auslöser erzeugt und mittels des Leitelements an den Transponder übermittelt wird. Insbesondere kann das Auslösesignal eine Änderung einer optischen und/oder elektrischen Eigenschaft des Auslösers von einem ersten Zustand in einen zweiten Zustand sein, der das Auslösesignal bildet, bzw. in dem der Transponder irreversibel beschreibbar ist. Entsprechend ist in dieser Ausführung bevorzugt, dass der Transponder nur in dem zweiten Zustand irreversibel beschreibbar ist und z.B. in dem ersten Zustand oder einem anderen, dritten Zustand nicht beschreibbar ist. Der zweite Zustand kann dauerhaft sein und irreversibel, so dass sich bei Veränderung der Vorrichtung nur ein neuer, dritter Zustand einstellen kann, in dem z.B. die Vorrichtung zerstört ist, insbesondere nach Durchtrennen der Fixiereinrichtung beim Entfernen vom Schlachttierkörper. Der Auslöser ist bevorzugt irreversibel in den zweiten Zustand zu ändern durch Fixieren der Vorrichtung am Schlachttierkörper, insbesondere durch Bewegen der Rastelemente in die Verrastungsstellung.

Das Beschreiben des Transponders mit Identifikationsmerkmalen erfolgt z.B. mittels einer Schreibeinrichtung, während die Vorrichtung an der Schreibeinrichtung positioniert ist. Als Schreibeinrichtung kann die Vorrichtung an einem herkömmlichen Schreibkopf zum Übermitteln von Identifikationsmerkmalen auf den Transponder positioniert bzw. vorbeigeführt werden. Ein Transponder kann einen ausschließlich irreversibel beschreibbaren Speicher mit daran gekoppelter Antenne aufweisen, z.B. für ein Verfahren entsprechend ISO/IEC 14443 oder ISO/IEC 15693, Teil 2. Bevorzugt ist der Transponder und/oder die Schreibeinrichtung eingerichtet, auf den Transponder gespeicherte Identifikationsmerkmale als irreversibel zu kennzeichnen und weist dazu z.B. eine Permalock-Funktion gemäß des vorgenannten Standards auf.

Generell bevorzugt ist eine Datenbank vorgesehen, die zur Speicherung der Zuordnung der Identifikationsmerkmale, die an die Vorrichtung übermittelt werden, zu Daten eingerichtet ist, die den Schlachttierkörper identifizieren, z.B. Herkunftsdaten des Schlachttierkörpers.

In einer Ausführungsform ist eines der Rastelemente beweglich geführt und mit einem Auslöser verbunden, dessen zumindest eine elektrische und/oder optische Eigenschaft durch die Relativbewegung veränderlich ist, wobei der Transponder elektrisch und/oder optisch mittels des Leitelements mit dem Auslöser gekoppelt ist. Durch die Kopplung des Transponders mit dem Auslöser führt die Bewegung eines Rastelements, bzw. die Relativbewegung zweier Rastelemente gegeneinander zu einer Änderung des elektrischen und/oder optischen Signals des Auslösers und dessen Übertragung mittels des Leitelements, das ein elektrischer oder optischer Leiter sein kann, an den mit diesem gekoppelten Transponder. Der Transponder ist in dieser Ausführungsform eingerichtet, bei Änderung des elektrischen und/oder optischen Auslösesignals, die vom Auslöser erzeugt wird, einer irreversiblen Veränderung zu unterliegen, insbesondere einer irreversiblen Aktivierung, bevorzugt einer irreversiblen Aktivierung zur einmaligen Speicherung von Identifikationsmerkmalen.

In der zweiten Ausführungsform ist der Auslöser mit zumindest einem Rastelement verbunden, so dass die Bewegung des Rastelements in eine Verrastungsposition das Auslösesignal erzeugt, insbesondere dadurch, dass der Auslöser zumindest zwei Anteile aufweist, die in der Verrastungsposition voneinander weiter entfernt oder näher aneinander angeordnet sind, als in der offenen Position, in der die Vorrichtung nicht an einem Schlachttierkörper befestigt ist, z.B. in einem offenen Zustand. Dabei kann z.B. ein erster Anteil des Auslösers an oder in einem ersten Rastelement angeordnet sein und ein zweiter Anteil des Rastelements an oder in einem zweiten Rastelement. Z.B. kann ein Auslöser ein Kondensator sein, der aus einem ersten Anteil und einem zweiten Anteil besteht, so dass die Bewegung in die Verrastungsposition eine Änderung der Kapazität verursacht, die das Auslösesignal bildet. Alternativ kann der Auslöser einen elektrischen Leiter mit einem ersten und einem zweiten Anteil bilden, dessen Widerstand in der Verrastungsposition einen zweiten Zustand einnimmt, z.B. durch Trennen oder Kontaktieren des ersten und zweiten Anteils in der Verrastungsposition, wenn die Anteile in der offenen Position in Kontakt bzw. voneinander getrennt sind. Weiter alternativ kann der Auslöser eine Induktivität ausbilden, z.B. indem ein erster Anteil ein Leiter ist und ein zweiter Anteil ein Eisenstück, so dass die Größe der Induktivität in der Verrastungsposition einen zweiten Zustand einnimmt, z.B. dadurch, dass die Anteile des Auslösers in der Verrastungsposition näher aneinander oder weiter voneinander entfernt angeordnet sind, als in der offenen Position.

Optional kann der Auslöser eingerichtet sein, bei Bewegung der Rastelemente in die Verrastungsposition zerstört zu werden und dadurch das Auslösesignal zu erzeugen. Insbesondere in dieser Ausführungsform kann der Auslöser ein elektrischer oder optischer Leiter sein, z.B. ein Abschnitt des Leitelements, oder ein optisches Element, z.B. ein Spiegel, ein Farbstoff oder eine Strahlungsquelle sein, wobei insbesondere das Leitelement ein optischer Leiter ist, oder der Auslöser kann ein elektrischer Widerstand, ein Kondensator oder eine Induktivität sein, wobei insbesondere das Leitelement ein elektrischer Leiter ist. Der Auslöser kann z.B. dadurch eingerichtet sein, in der Verrastungsposition zerstört zu werden, dass er in einer Position an einem ersten Rastelement angeordnet ist, die in der Verrastungsposition von einem zweiten Rastelement eingenommen wird. Dadurch verdrängt das zweite Rastelement den Auslöser vom Leitelement. Eine Position, die in der Verrastungsposition von einem zweiten Rastelement eingenommen wird, ist z.B. ein offener Querschnitt des ersten Rastelements, in dem in der Verrastungsposition das zweite Rastelement angeordnet ist, oder eine Oberfläche des ersten Rastelements, über die das zweite Rastelement geführt wird bzw. reibt, wenn die Rastelemente in die Verrastungsposition gebracht werden.

In einer einfachen Ausführungsform ist der Auslöser ein Abschnitt des Leitelements, das ein elektrischer Leiter ist, z.B. ein dünner Draht, wobei der Auslöser in der offenen Stellung der Rastelemente durch den lichten Querschnitt einer umfänglich geschlossenen oder U-förmigen Führung angeordnet ist, die ein erstes Rastelement bildet, und ein zweites Rastelement in der Verrastungsposition in diese Führung bewegt ist. Dadurch zerstört das zweite Rastelement in der Verrastungsposition den Auslöser, so dass dessen Leitfähigkeit geändert ist. Die Änderung der Leitfähigkeit des Auslösers bildet das Auslösesignal, das durch das Leitelement an den Transponder übermittelt wird. Der Transponder, der irreversibel beschreibbar ist, ist eingerichtet, dass er ausschließlich bei der geänderten Leitfähigkeit mit Identifizierungsmerkmalen beschreibbar ist. Der Transponder ist z.B. dadurch bei der geänderten Leitfähigkeit beschreibbar, dass der Widerstand der Leiterbahnen oder die Induktivität der Spule sich nach oben oder unten ändert und das schwingungsfähige Gebilde entsprechend beeinflußt, wobei optional die Beschreibbarkeit durch die geänderte Leitfähigkeit der Leiterbahnen oder die geänderte Induktivität der Spule irreversibel ist.

Optional weist die Vorrichtung zwei Transponder auf, die auf unterschiedliche Basisfrequenzen eingestellt sind, z.B. ausgewählt aus 125kHz und 14,56MHz. In dieser Ausführungsform kann jeder Transponder mit einem separaten oder mit einem gemeinsamen Auslöser gekoppelt sein.

In einer weiteren Ausführungsform ist der Auslöser mit einem der Rastelemente verbunden und mit dem Leitelement, das ein mechanisches Kopplungselement ist, das die Bewegung der Rastelemente von der offenen in die Verrastungsposition als Auslösesignal auf den Transponder überträgt. Der Auslöser kann an einem der Rastelemente festgelegt sein oder an einem der Rastelemente verschieblich geführt sein, z.B. einen verschieblichen Anschlag für das andere Rastelement bilden, der bei Bewegung der Rastelemente gegeneinander in die Verrastungsposition verschoben wird. Der Transponder ist eingerichtet, das durch das Leitelement übertragene Auslösesignal z.B. dadurch aufzunehmen, dass eines seiner elektrischen Bauteile verändert wird. Diese Veränderung kann das Betätigen eines Schalters des Transponders sein, die Zerstörung eines Leiters des Transponders, z.B. die Unterbrechung eines Leiters, insbesondere eines Leiters, der dessen Antenne im unzerstörten Zustand blockiert.

Der Auslöser kann z.B. eine Metallfolie sein, die zumindest einen Teil der Antenne des Transponders abdeckt und so die Energieeinkopplung, die für die Beschreibung des Transponders erforderlich ist, verhindert. Ein Auslöser in Form einer Metallfolie, die die Antenne des Transponders zu einem Teil oder vollständig, einseitig oder beidseitig abdeckt, kann manuell entfernbar sein und ist bevorzugt eingerichtet, bei Bewegung eines Rastelements zumindest teilweise zerstört oder von der Antenne entfernt zu werden. Dazu kann die Metallfolie mit einem Rastelement verbunden sein oder im Bewegungsbereich des Rastelements angeordnet sein, so dass die Bewegung des Rastelements in seine Verrastungsposition die Metallfolie zumindest teilweise zerstört oder von der Antenne entfernt und die Einkopplung von Energie in die Antenne erlaubt.

Bevorzugt weist der Auslöser ein Federelement auf, das eingerichtet ist, den Auslöser bei Befestigung der Vorrichtung an einem Schlachttierkörper zu betätigen. Ein solches Federelement kann z.B. gegen die Verrastungsstellung der Rastelemente wirken und bei Befestigung der Vorrichtung am Schlachttierkörper belastet werden. Das Federelement ist mit dem Auslöser verbunden, so dass bei Entfernen der Vorrichtung vom Schlachttierkörper der Auslöser verändert wird, bevorzugt zerstört wird.

Die Erfindung wird nun genauer mit Bezug auf die Figuren beschrieben, die schematisch in
- Figur 1 einen Transponder, der eine Antenne aufweist, mit Auslöser zeigt,
- Figur 2 einen mit einem Rastelement gekoppelten Auslöser,
- Figur 3 eine Aufsicht auf eine erfindungsgemäße Vorrichtung,
- Figur 4 eine Ausführungsform eines Auslösers,
- Figur 5 eine weitere Ausführungsform eines Auslösers,
- Figur 6 eine weitere Ausführungsform eines Auslösers,
- Figur 7 eine Aufsicht auf eine erfindungsgemäße Vorrichtung,
- Figur 8 eine Ausführungsform eines Auslösers im ersten Zustand,
- Figur 9 die Ausführungsform von Figur 9 im zweiten Zustand,
- Figur 10 eine weitere Ausführungsform eines Auslösers im ersten Zustand,
- Figur 11 die Ausführungsform von Figur 11 im zweiten Zustand,
- Figur 12 eine weitere Ausführungsform eines Auslösers im ersten Zustand,
- Figur 13a-f Ausführungsformen der Vorrichtung in Explosionsdarstellung, nämlich in Fig. 13a einen Transponder (RFID) in Aufsicht und in Figur 13b in Seitenansicht, der mit einer Fixiereinrichtung nach Fig. 13c oder nach Fig. 13d verbunden wird, die Seitenansicht auf die Längskante von Fig. 13c ist in Fig. 13e, die Seitenansicht auf die schmale Kante von Fig. 13d ist in Fig. 13f gezeigt,
- Figur 14 eine Vorrichtung, angeordnet an der Schmalstelle eines Beins eines Schlachttierkörpers,
- Figuren 15a-c Teile der Vorrichtung,
- Figur 16 eine Ausführungsform eines Auslösers,
- Figur 17 eine weitere Ausführungsform eines Auslösers und
- Figur 18 eine Ausführungsform einer Vorrichtung.

In den Figuren bezeichnen gleiche Bezugsziffern funktionsgleiche Elemente.

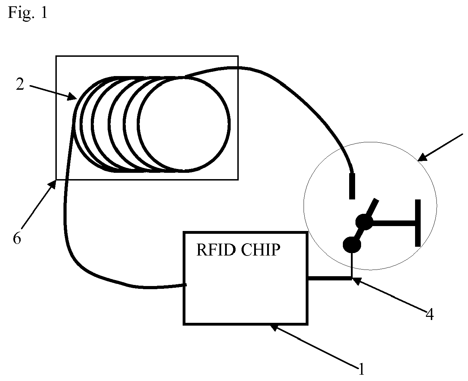

Figur 1 zeigt einen Transponder 1 (RFID CHIP), der eine Antenne 2 aufweist, mit einem Auslöser 3, der mittels eines Leitelements mit dem Transponder 1 gekoppelt ist. Der Auslöser 1, der schematisch als Schalter außerhalb des Transponders 1 dargestellt ist, kann außerhalb des Transponder 1 oder innerhalb des Transponders 1 angeordnet sein. Der Auslöser 3 in Form eines Schalters kann das Auslösesignal in der offenen Stellung erzeugen, z.B. kann der Transponder eingerichtet sein, bei einmaliger Bewegung des Schalters in die offene Stellung die Unterbrechung des Leitelements 4 als Auslösesignal zu registrieren, bzw. nach einmaliger Unterbrechung des Leitelements 4 beschreibbar zu sein. Alternativ kann der Transponder eingerichtet sein, nur in der geschlossenen Stellung des Schalters beschreibbar zu sein. Die Rastelemente der Vorrichtung sind in dieser Figur nicht gezeigt.

Als eine alternative Ausführungsform des Auslösers 3 ist eine Metallfolie 6 gezeigt, die die Antenne 2 des Transponders 1 abdeckt und z.B. bei Verrastung der Vorrichtung zerstört oder entfernt wird. Zur Zerstörung oder Entfernung der Metallfolie 6 ist diese z.B. manuell entfernbar oder bevorzugt mit einem Rastelement (nicht gezeigt) verbunden oder in dessen Bewegungsbereich angeordnet.

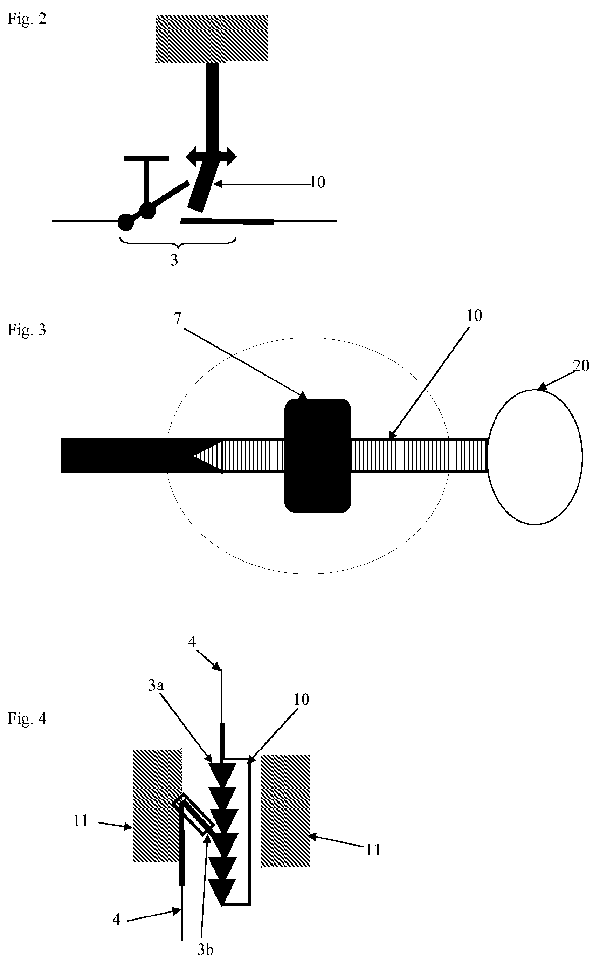

Figur 3 zeigt einen mit einem Rastelement 10 gekoppelten Auslöser 3. Der Auslöser 3 ist dadurch mit dem Rastelement 10 gekoppelt, dass der Auslöser 3 im Bewegungsbereich des Rastelements 10 angeordnet ist, so dass die Bewegung des Rastelements 10 in die Verrastungsposition den Auslöser 3 betätigt. Alternativ kann der Auslöser 3 mechanisch mit dem Rastelement 10 verbunden sein.

Figur 4 zeigt eine Ausführungsform der Vorrichtung, die an einem ersten Rastelement 10, das gegen ein zweites Rastelement 11 beweglich ist, eine Ausnehmung 20 aufweist, die in Form einer Öse zum Einhängen an einen Fleischerhaken geeignet ist. Das erste und zweite Rastelement 10, 11 können umfänglich um einen Abschnitt eines Schlachttierkörpers angeordnet und durch Verrastung daran befestigt werden. Der Transponder 1 ist in einem Gehäuse 7 angeordnet, in dem bevorzugt auch der Auslöser 3 enthalten ist.

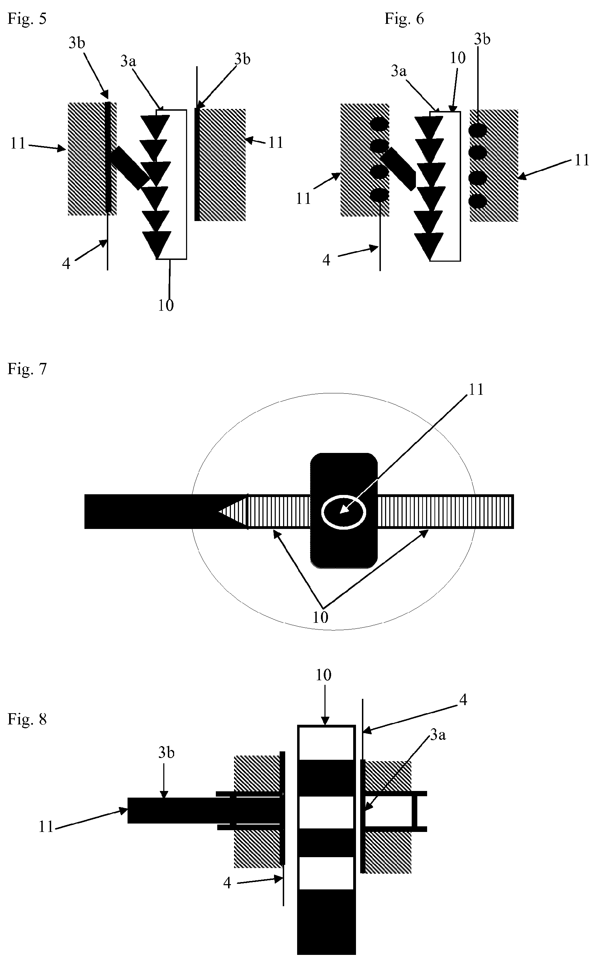

Figur 5 zeigt einen Auslöser 3, der dadurch mit den Rastelementen 10, 11 gekoppelt ist, dass ein erster Anteil 3 a des Auslösers 3 mit dem ersten Rastelement 10 verbunden ist und ein zweiter Anteil 3b des Auslösers 3 mit dem zweiten Rastelement 11, das z.B. eine Sperrklinke ist, die in das erste Rastelement 10 eingreift. Erster und zweiter Anteil 3a, 3b des Auslösers 3 können jeweils elektrische Kontakte sein, deren Berührung das Auslösesignal bildet.

In Alternative zu Figur 5 zeigt Figur 6 einen induktiven Auslöser 3, dessen erster Anteil 3a bei Bewegung des ersten Rastelements 10 relativ zum zweiten Rastelement 11 zwischen seinen zweiten Anteil 3b bewegt werden, der einen Kondensator bildet, z.B. beabstandete flächige Elemente. In dieser Ausführungsform wird der Auslöser 3 von einem ersten Anteil 3a und einem zweiten Anteil 3b gebildet, deren relative Bewegung das Auslösesignal in Form einer Kapazitätsänderung erzeugt, das mittels des Leitelements 4 an den Transponder 1 geleitet wird. Das zweite Rastelement 11 ist vorliegend als Sperrklinke gezeigt, die in das erste Rastelement 10 eingreift.

Als weitere Alternative zeigt Figur 7 einen Auslöser 3, der als ersten Anteil 3a einen Kern, aufweist, insbesondere einen Eisenkern, der mit dem ersten Rastelement 10 verbunden ist und eine Wicklung als zweiten Anteil 3b, der mit dem zweiten Rastelement 11 verbunden ist. In dieser Ausführungsform wird der Auslöser 3 von einem ersten Anteil 3a und einem zweiten Anteil 3b gebildet, deren relative Bewegung das Auslösesignal in Form einer Induktivitätsänderung erzeugt, das mittels des Leitelements 4 an den Transponder 1 geleitet wird.

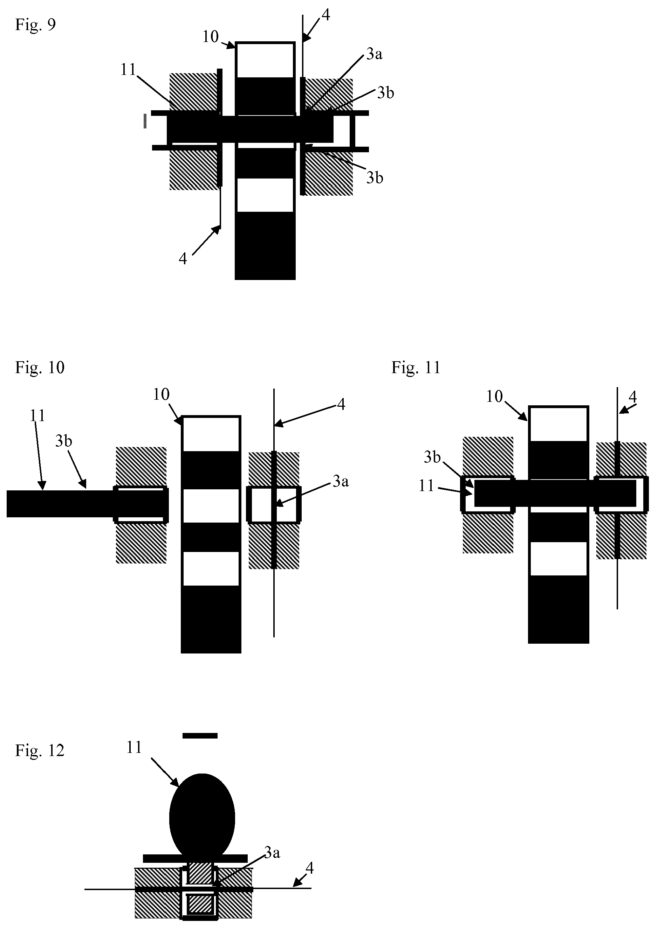

Figur 8 zeigt ein Gehäuse 7 für den Transponder 1, das mit dem ersten Rastelement 10 verbunden ist. Das erste Rastelement 10 wird mittels des zweiten Rastelements 11, das am Gehäuse 7 geführt ist, verrastet bzw. verriegelt. Das zweite Rastelement 11 bildet den zweiten Anteil 3b des Auslösers 3. Der erste Anteil 3a des Auslösers 3 ist mit dem Gehäuse 7 verbunden. Das Leitelement 4 weist zwei beabstandete Anteile auf, die jeweils in dem Gehäuse angeordnet sind. Fig. 9 zeigt den Auslöser im ersten Zustand, in der die Rastelemente 10, 11 nicht verrastet sind und der Auslöser kein Auslösesignal erzeugt. In dieser Ausführungsform bildet das zweite Rastelement 11 den zweiten Anteil 3b des Auslösers 3 und kontaktiert in der Verrastungsstellung, in der es mit dem ersten Rastelement 10 in Eingriff tritt, den ersten Anteil 3 a und verbindet die beabstandeten Anteile des Leitelements 4. Diese Verrastungsstellung ist in Figur 10 gezeigt.

Figur 11 zeigt eine Ausführungsform des Auslösers 3, der z.B. im Gehäuse 7 der in Figur 8 gezeigten Ausführungsform angeordnet sein kann. Das erste Rastelement 10 kann mit dem zweiten Rastelement 11, das im Gehäuse 7 geführt ist, in Eingriff treten. In der ersten Stellung, in Figur 11 gezeigt, schließt der Auslöser 3 die Leitung, die durch das Leitelement 4 gebildet wird. In der Verrastungsstellung, in Figur 12 gezeigt, unterbricht das zweite Rastelement 11 den Leiter, der den Auslöser 3 bildet und erzeugt eine Unterbrechung der Leitung als Auslösesignal, das über das Leitelement 4 an den Transponder übermittelt wird. Diese Ausführungsform hat den Vorteil, dass das zweite Rastelement 11 nicht elektrisch leitend ist und vollständig aus nicht leitfähigem Kunststoff bestehen kann. In dieser Ausführungsform kann der Auslöser 3 in ersten Zustand eine kurzschließende Verbindung des Transponders, z.B. an dessen Antenne 2 bilden, die in der Verrastungsstellung in den zweiten Zustand geändert wird, in dem die kurzschließende Verbindung getrennt ist. Die kurzschließende Verbindung kann z.B. das Leitelement 4 sein oder eine damit verbundene Spule.

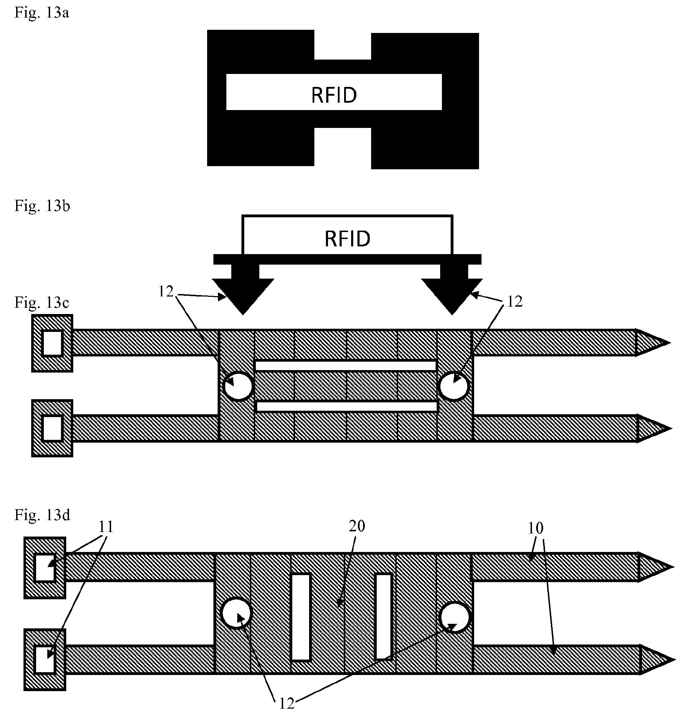

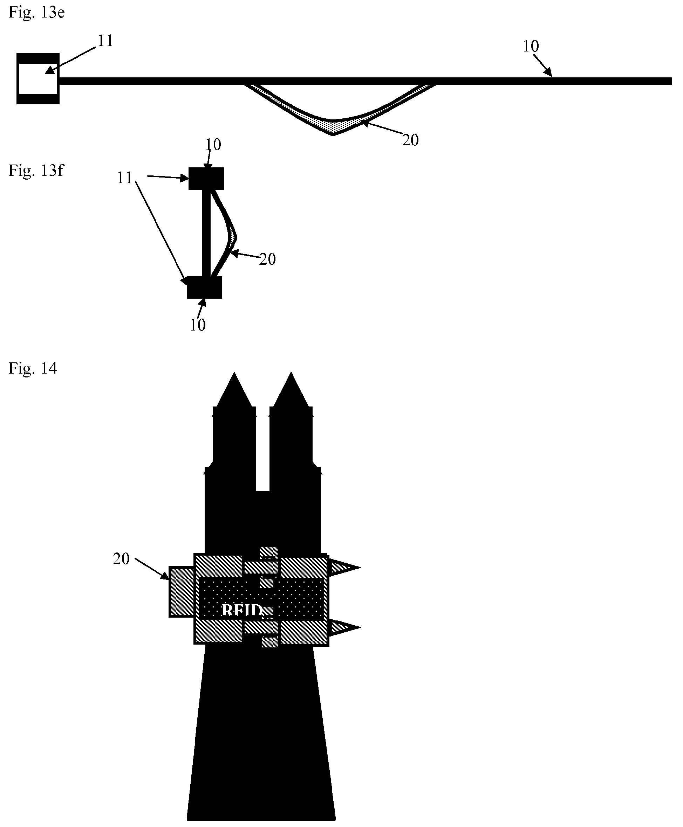

Figur 13 zeigt eine Ausführungsform, bei der das zweite Rastelement 11 mit dem Auslöser 3 in Eingriff steht, z.B. den Auslöser 3 abschnittsweise umfasst. Der Auslöser 3 ist in einer Ausnehmung eines Gehäuses oder eines Rastelements 10, 11 angeordnet, wobei bevorzugt der Auslöser 3 durch die Ausnehmung angeordnet ist. Bei Bewegung des zweiten Rastelements 11, z.B. durch Drehung oder Verschieben in der Ausnehmung, wird der Auslöser 3 abschnittsweise unterbrochen.

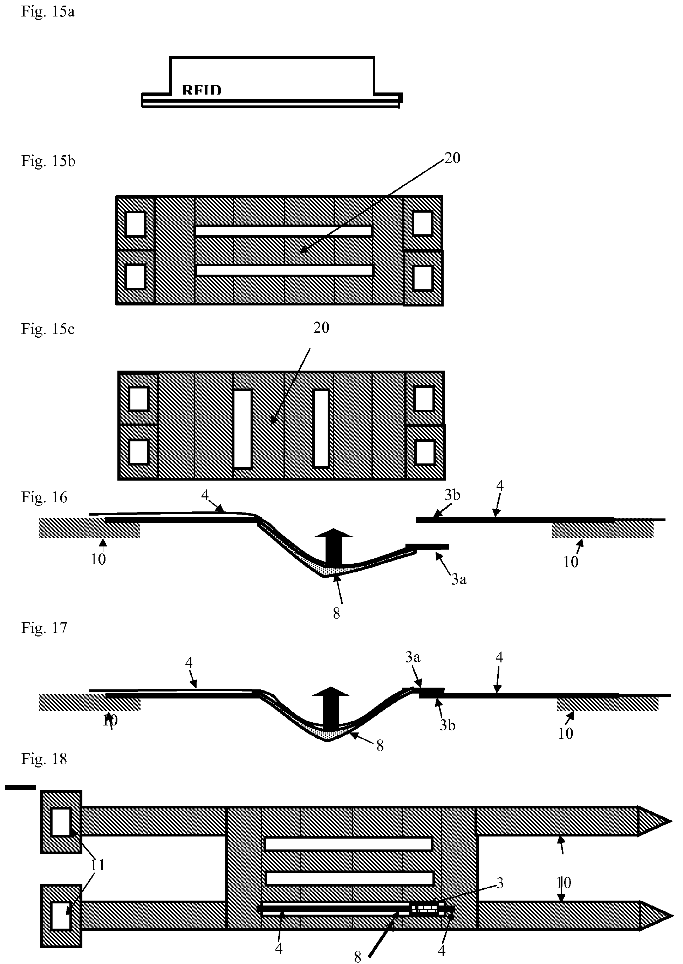

Figur 16 zeigt eine Vorrichtung, bei der der Transponder 1 (Fig. 16a, Fig. 16b, RFID), der mit einem Auslöser 6 verbunden ist, mittels Verbindungselementen 12 verbunden werden kann. Diese Verbindungselemente 12 sind so gestaltet, dass die Verbindung irreversibel ist bzw. nicht zerstörungsfrei lösbar ist. Die Vorrichtung kann einen Steg mit Überlänge haben, der eine Ausnehmung 20 als Öse bildet. In den Figuren 16c und 16d sind beispielhafte Fixiereinrichtungen in Aufsicht gezeigt, die erste Rastelemente 10 aufweisen, die in zweite Rastelemente 11 eingreifen können, z.B. nach Art eines herkömmlichen Kabelbinders. In Figur 16c ist die Anordnung eines Stegs mit Überlänge zur Ausbildung einer Ausnehmung 20 für eine Öse gezeigt, deren Öffnung parallel zum ersten Rastelement 10 zugänglich ist, wie die Seitenansicht auf die Längskante der ersten Rastelemente 10 in Figur 16e zeigt. In Figur 16d ist die Ausbildung einer Ausnehmung 20 gezeigt, deren Öffnung senkrecht zum ersten Rastelement 11 zugänglich ist, wie in der Seitenansicht auf die Schmalseite der ersten Rastelemente 10 in Figur 16f gezeigt ist. Figur 17 zeigt diese Ausführungsformen an dem Schlachttierkörper und zeigt die Ausnehmung 20, die zur Anordnung an einem Fleischerhaken über die ersten Rastelemente 10 ragt.

Figur 18 zeigt eine alternative Ausführungsform zu der von Figur 16, bei der der Transponder 1 mitttels einer irreversiblen Klebung mit den Rastelementen 10, 11 verbunden wird.

Figuren 18a-c zeigt einen Teil der Rasteinrichtung, die auch als Träger oder Manschette bezeichnet werden kann, die mit handelsüblichen Klammern und/oder Krampen oder Kabelbindern als Rastelement über die an den Außenseiten liegenden Öffnungen geschlossen werden kann. Die Rastelemente sind nicht gezeigt. Der mittlere Steg ist etwas länger als die außen liegenden und bildet eine Öse bzw. Ausnehmung 20. Nach dem Schließen der Manschette kann diese leicht an der Öse, die durch den mittleren Steg 20 gebildet wird, an einen Fleischerhaken gehängt werden. Der Auslöser und die Rastelemente sowie der Transponder können an der Manschette an den äußeren Stegen untergebracht sein und z.B. mittels Verbindungselementen 12 und/oder einer Klebung mit der Manschette verbunden sein. Weiter zeigt Figur 18b, dass die Ausnehmung 20 etwa senkrecht zu den Rastelementen angeordnet sein kann, wenn der Steg mit Überlänge parallel zu den Rastelementen liegt, oder die Ausnehmung 20 etwa parallel zu den Rastelementen angeordnet sein kann, wenn der Steg mit Überlänge etwa senkrecht zu den Rastelementen liegt (Fig. 18c).

Die Figuren 19 bzw. 20 zeigen Ausführungsformen, bei denen der Auslöser 3 einen ersten Anteil 3a aufweist, der an einem Federelement 8, das gegenüber der Fixiereinrichtung, z.B. ausgebildet durch Rastelemente 10, 11 beweglich ist, angeordnet ist. Durch die Anordnung am Federelement 8 wird der erste Anteil 3a des Auslösers 3 ohne Belastung des Federelements 8 vom zweiten Anteil 3b weg bewegt und bei Belastung des Federelements 8 gegen den zweiten Anteil 3b bewegt, wie in Figur 19 gezeigt ist. Figur 20 zeigt eine Ausführung, bei der der erste Anteil 3a des Auslösers 3 bei Belastung des Federelements 8 vom zweiten Anteil 3b weg bewegt wird und ohne Belastung des Federelements 8 gegen den zweiten Anteil 3b bewegt wird. Generell ist bevorzugt, dass das Federelement 8 die Oberfläche der Fixiereinrichtung, z.B. des ersten Rastelements 10, überragt, z.B. über die Oberfläche der Fixiereinrichtung, die gegen den Schlachttierkörper anzuordnen ist. So wird das Federelement 8 bei Fixierung der Vorrichtung am Schlachttierkörper belastet und dadurch der Auslöser 3 in einen zweiten Zustand gebracht.

Das Federelement 8 ist mit seinem Ende, das gegenüber des ersten Anteils 3a liegt, bevorzugt in einem Abstand vom zweiten Anteil 3b des Auslösers 3 an einem Rastelement 10, 11 befestigt. Das Ende des Federelements 8, das dem ersten Anteil 3a gegenüberliegt, und der zweite Anteil 3b des Auslösers 3 können an beabstandeten Bereichen einer Ausnehmung 9 der Fixiereinrichtung angeordnet sein, wobei optional das Federelement 8 die Ausnehmung überspannt. Dies ist in Figur 21 gezeigt. Bevorzugt überragt ohne Belastung das Federelement die Fixiereinrichtung.

## Patentansprüche

1. Vorrichtung zur Verwendung als Markierungseinrichtung für Schlachttierkörper, die eine Fixiereinrichtung mit zumindest zwei relativ zueinander in eine irreversible Verrastungsposition beweglichen Rastelementen (10, 11) und einen beschreibbaren Transponder (1) aufweist, der eine Antenne und einen Speicher zum Speichern von Identifizierungsmerkmalen aufweist, **gekennzeichnet durch** einen Auslöser (3), der mittels eines Leitelements (4) mit dem Transponder (1) gekoppelt ist und eingerichtet ist, ein Auslösesignal zu erzeugen, wobei das Leitelement (4) zur Übermittlung des Auslösesignals eingerichtet ist und **dadurch**, dass der Transponder (1) eingerichtet ist, nur bei Erzeugung und/oder nach Übermittlung des Auslösesignals beschreibbar zu sein, wobei der Auslöser (3) zwei Anteile (3a, 3b) aufweist, von denen ein erster Anteil (3a) mit dem ersten Rastelement (10) verbunden ist und ein zweiter Anteil (3b) mit dem zweiten Rastelement (11) verbunden ist, wobei der erste und der zweite Anteil (3a, 3b) elektrische oder optische Elemente sind, die bei Bewegung in die Verrastungsposition das Auslösesignal erzeugen oder die in der Verrastungsposition einen zweiten Zustand einnehmen, der das Auslösesignal bildet.

2. Vorrichtung nach Anspruch 1, **dadurch gekennzeichnet, dass** der Auslöser in einem ersten Zustand ist, in dem die Antenne des Transponders (1) nicht funktionsfähig mit seinem Speicher gekoppelt ist und das Auslösesignal ein zweiter Zustand einer optischen oder elektrischen Eigenschaft des Auslösers ist, in welchem der Transponder (1) dadurch beschreibbar ist, dass seine Antenne funktionsfähig mit seinem Speicher gekoppelt ist.

3. Vorrichtung nach einem der voranstehenden Ansprüche, **dadurch gekennzeichnet, dass** der Auslöser (3) mit zumindest einem ersten der Rastelemente (10) verbunden ist und eingerichtet ist, dadurch das Auslösesignal zu bilden, dass er bei Bewegung der Rastelemente (10, 11) in die Verrastungsposition eine funktionsfähige elektrische Kopplung der Antenne des Transponders (1) mit dessen Speicher erzeugt.

4. Vorrichtung nach einem der voranstehenden Ansprüche, **dadurch gekennzeichnet, dass** der zweite Zustand des Auslösers (3) ein gegenüber dem ersten Zustand des Auslösers (3) im nicht verrasteten Zustand der Rastelemente (10, 11) zerstörter Zustand ist.

5. Vorrichtung nach einem der voranstehenden Ansprüche, **dadurch gekennzeichnet, dass** der Auslöser (3) eine Schmelzsicherung ist oder einen elektrisch leitenden Abschnitt des Auslösers (3) oder einen elektrisch leitenden Abschnitt einer Kurzschlußleitung für die Antenne aufweist, der bei Bewegen der Rastelemente (10, 11) in die Verrastungsposition zerstört wird.

6. Vorrichtung nach einem der Ansprüche 1 bis 5, **dadurch gekennzeichnet, dass** der Auslöser einen ersten (3a) und einen zweiten Anteil (3b) aufweist, die ausgewählt sind aus elektrischen Elementen, die zwei Anteile eines Kondensators, zwei Anteile einer Kapazität oder zwei Anteile einer Induktivität sind, oder aus optischen Elementen, die eine optische Faser mit einer Strahlungsquelle sind, die insbesondere ein fluoreszierender oder phosphoreszierender Farbstoff ist.

7. Vorrichtung nach einem der voranstehenden Ansprüche, **dadurch gekennzeichnet, dass** das Auslösesignal ein zweiter dauerhafter Zustand des Auslösers (3) ist und dass der Transponder (1) eingerichtet ist, bei Veränderung des Auslösesignals gespeicherte Identifikationsdaten zu verändern, insbesondere zu löschen.

8. Vorrichtung nach einem der voranstehenden Ansprüche, **dadurch gekennzeichnet, dass** der Auslöser (3) an einem Rastelement (10, 11) festgelegt ist oder ein an einem Rastelement (10, 11) verschieblich geführter Anschlag ist, und wobei das Leitelement (4) ein mechanisches Kopplungselement ist, das die Bewegung des Auslösers (3) auf einen Leiter oder einen Schalter des Transponders (1) überträgt.

9. Vorrichtung nach einem der voranstehenden Ansprüche, **dadurch gekennzeichnet, dass** ein Schreibkopf zum Senden von Identifizierungsmerkmalen auf den Transponder (1) gerichtet ist und der Schreibkopf eine zusätzliche Energiequelle aufweist, die Energie auf den Auslöser (3) überträgt, wobei der Auslöser (3) eingerichtet ist, bei Beaufschlagung mit Energie das Auslösesignal zu erzeugen.

10. Vorrichtung nach einem der voranstehenden Ansprüche, **dadurch gekennzeichnet, dass** der Auslöser (3) dadurch in dem zweiten Zustand ist, dass er eine funktionsfähige elektrische Kopplung der Antenne mit dem Speicher herstellt.

11. Vorrichtung nach einem der voranstehenden Ansprüche, **dadurch gekennzeichnet, dass** der Auslöser (3) als einen ersten Anteil (3a) einen an einem gegenüber dem Fixiereinrichtung beweglichen Federelement (8) angeordneten Kontakt aufweist, das über die Fixiereinrichtung ragt, und als einen zweiten Anteil (3b) einen Kontakt, der im Bewegungsbereich des ersten Anteils (3a) angeordnet ist.

12. Vorrichtung nach einem der voranstehenden Ansprüche, **dadurch gekennzeichnet, dass** an der Fixiereinrichtung eine Ausnehmung (20) in Form einer Öse gebildet ist.

13. Verfahren zur irreversiblen Markierung eines Schlachttierkörpers mittels einer Vorrichtung nach einem der voranstehenden Ansprüche durch Bewegen zumindest eines von den zwei relativ zueinander in eine irreversible Verrastungsposition beweglichen Rastelementen (10, 11) der Fixiereinrichtung zum Fixieren der Vorrichtung an einem Schlachttierkörper, Erzeugen eines Auslösesignals durch den Auslöser (3), der mittels des Leitelements (4) mit dem Transponder (1) gekoppelt ist und Übermitteln des Auslösesignals an den Transponder (1), der nur durch das Auslösesignal in einen Zustand gebracht wird, in dem er beschreibbar ist.

14. Verfahren nach Anspruch 13, **dadurch gekennzeichnet, dass** dass der Auslöser mit einem der Rastelemente verbunden ist und bei Bewegen zumindest eines der Rastelemente (10, 11) in der irreversiblen Verrastungsposition eine funktionsfähige elektrische Kopplung der Antenne mit dem Speicher herstellt oder der Auslöser einen elektrisch leitenden Abschnitt einer Kurzschlußleitung für die Antenne aufweist und der Auslöser bei Bewegen zumindest eines der Rastelemente (10, 11) in die irreversible Verrastungsposition zerstört wird, um das Auslösesignal zu erzeugen.

## Claims

1. Device for use as a marking device for animal carcasses, having a fixation device having at least two snap-in locking elements (10, 11) movable relative to one another into an irreversible locking position and an inscribable transponder (1) which has an antenna and a storage for storing identification features, **characterized by** a release (3) which is coupled to the transponder (1) by means of a conductor element (4) and is arranged to produce a release signal, wherein the conductor element (4) is arranged for transmitting the release signal and in that the transponder (1) is arranged to be inscribable only upon generation and/or following transmittance of the release signal, the release (3) having two portions (3a, 3b), of which a first portion (3a) is connected to a first snap-in locking element (10) and a second portion (3b) is connected to the second snap-in locking element (11), wherein the first and the second portions (3a, 3b) are electrical or optical elements which upon movement into the locking position produce the release signal or which in the locking position assume a second state, which forms the release signal.

2. Device according to claim 1, **characterized in that** the release is in a first state, in which the antenna of the transponder (1) is coupled non-functionally to its storage and the release signal is a second state of an optical or electrical property of the release, in which the transponder (1) is inscribable by its antenna being coupled functionally to its storage.

3. Device according to one of the preceding claims, **characterized in that** the release (3) is connected to at least a first one of the snap-in locking elements (10) and is arranged to produce the release signal by producing a functional electrical coupling of the antenna of the transponder (1) with its storage upon movement one of the snap-in locking elements (10, 11) into the locking position.

4. Device according to one of the preceding claims, **characterized in that** the second state of the release (3) in relation to the first state of the release (3) in the non-locking state of the snap-in locking elements (10, 11) is a destroyed state.

5. Device according to one of the preceding claims, **characterized in that** the release (3) is a fusible cutout or has an electrically conductive section of the release (3) or an electrically conductive section of a short circuit conductor for the antenna which is destroyed upon movement of the snap-in locking elements (10, 11) into the locking position.

6. Device according to one of claims 1 to 5, **characterized in that** the release has a first (3a) and a second portion (3b), which are selected from electrical elements which are two portions of a condenser, two portions of a capacitor or two portions of an inductivity, or of optical elements, which are an optical fiber having a irradiation source, which especially is a fluorescent of phosphorescing dye.

7. Device according to one of the preceding claims, **characterized in that** the release signal is a second permanent state of the release (3) and that the transponder (1) is arranged to change, especially to delete stored identification data upon changing of the release signal.

8. Device according to one of the preceding claims, **characterized in that** the release (3) is fixed on a snap-in locking element (10, 11) or is a stop slidably guided on a snap-in locking element (10, 11), and wherein the conducting element (4) is a mechanical coupling element that transfers the movement of the release (3) onto a conductor or a switch of the transponder (1).

9. Device according to one of the preceding claims, **characterized in that** a write-head is directed onto the transponder (1) for transmitting identification features and the write-head as an additional energy source that transfers energy onto the release (3), wherein the release (3) is arranged to generate the release signal upon application of energy.

10. Device according to one of the preceding claims, **characterized in that** the release (3) is in the second stage due to it generating a functional electrical coupling of the antenna to the storage.

11. Device according to one of the preceding claims, **characterized in that** the release (3) as a first portion of (3a) has a contact arranged on a spring element (8) moveable in relation to the fixation device, the spring element extending beyond the fixation device, and as a second portion (3b) has a contact arranged in the range of movement of the first portion (3a).

12. Device according to one of the preceding claims, **characterized in that** on the fixation device a recess (20) as formed in the form of an ear.

13. Process for irreversibly marking an animal carcass by means of a device according to one of the preceding claims by movement of at least one of the snap-in locking elements (10, 11), which are moveable in relation to one another into an irreversible locking position, the snap-in locking elements (10, 11) of the fixation device for fastening of the device to an animal carcass, producing a release signal by the release (3) which is coupled to the transponder (1) by means of a conducting element (4), and transmitting the release signal to the transponder (1) which is only brought into the state, in which it is inscribable, by the release signal.

14. Process according to claim 13, **characterized in that** the release is connected to one of the snap-in locking elements and upon movement of at least one of the snap-in locking elements (10, 11) into the irreversible locking position a functional electrical coupling of the antenna to the storage is generated or the release having an electrically conductive section of a short circuit conductor for the antenna, and the release upon movement of the least one of the snap-in locking elements (10, 11) into the irreversible locking position is destroyed for producing the release signal.

## Revendications

1. Equipement servant de dispositif de marquage pour carcasse, présentant un dispositif de fixation avec au moins deux éléments d'encliquetage (10, 11) mobiles l'un par rapport à l'autre vers une position d'encliquetage irréversible et un transpondeur descriptible (1), comportant une antenne et une mémoire permettant de stocker des caractéristiques d'identification, **caractérisé par** un déclencheur (3) qui est couplé à l'aide d'un élément de guidage (4) avec le transpondeur (1) et qui est conçu pour générer un signal de déclenchement, dans lequel l'élément de guidage (4) est conçu pour transmettre le signal de déclenchement et en ce que le transpondeur (1) est conçu pour être descriptible seulement en cas de génération et/ou de transmission du signal de déclenchement, dans lequel le déclencheur (2) se compose de deux parties (3a, 3b), dont une première partie (3a) est connectée au premier élément d'encliquetage (10) et une seconde partie (3b) est connectée au second élément d'encliquetage (11), où la première partie et la seconde partie (3a, 3b) sont des éléments électriques ou optiques qui génèrent le signal de déclenchement en cas de mouvement vers la position d'encliquetage ou bien qui adoptent un second mode dans la position d'encliquetage, mode permettant le signal de déclenchement.

2. Equipement selon la revendication 1, **caractérisé en ce que** le déclencheur adopte un premier mode, dans lequel l'antenne du transpondeur est accouplée avec sa mémoire de manière non fonctionnelle et le signal de déclenchement constitue un second mode d'une propriété optique ou électrique du déclencheur, dans lequel le transpondeur (1) est descriptible en ce sens que son antenne est accouplée à sa mémoire de manière fonctionnelle.

3. Equipement selon l'une des revendications précédentes, **caractérisé en ce que** le déclencheur (3) est connecté au moins à l'un des éléments d'encliquetage (10) et est conçu pour former le signal de déclenchement de façon à générer un accouplement électrique fonctionnel de l'antenne du transpondeur (1) avec la mémoire de celui-ci, en cas de mouvement des éléments d'encliquetage (10, 11) vers la position d'encliquetage.

4. Equipement selon l'une des revendications précédentes, **caractérisé en ce que** le second mode du déclencheur (3) est un mode détruit par rapport au premier mode du déclencheur (3), lorsque les éléments d'encliquetage (10, 11) ne sont pas en mode d'encliquetage.

5. Equipement selon l'une des revendications précédentes, **caractérisé en ce que** le déclencheur (3) est un fusible de sécurité ou bien présente une section électriquement conductrice du déclencheur (3) ou bien une section électriquement conductrice d'une conduite de court-circuit pour l'antenne, qui sera détruite lors du mouvement des éléments d'encliquetage (10, 11) vers la position d'encliquetage.

6. Equipement selon l'une des revendications 1 à 5, **caractérisé en ce que** le déclencheur présente une première partie (3a) et une seconde partie (3b), choisies parmi des éléments électriques, qui sont deux parties d'un condensateur, deux parties d'une capacitance ou deux parties d'une inductance, ou bien parmi des éléments optiques, qui constituent une fibre optique avec une source de rayonnement, en particulier un colorant fluorescent ou phosphorescent.

7. Equipement selon l'une des revendications précédentes, **caractérisé en ce que** le signal de déclenchement est un second mode durable du déclencheur (3) et **en ce que** le transpondeur (1) est conçu, pour modifier, en particulier pour effacer des données d'identification mémorisées et ce, en cas de modification du signal de déclenchement.

8. Equipement selon l'une des revendications précédentes, **caractérisé en ce que** le déclencheur (3) est fixé au niveau d'un élément d'encliquetage (10, 11) ou bien constitue une butée guidé de façon mobile au niveau d'un élément d'encliquetage (10, 11) et où l'élément de guidage (4) est un élément d'accouplement mécanique, élément transmettant le mouvement du déclencheur (3) à un conducteur ou un interrupteur du transpondeur (1).

9. Equipement selon l'une des revendications précédentes, **caractérisé en ce qu'**une tête d'écriture est conçue pour envoyer des caractéristiques d'identification au transpondeur (1) et la tête d'écriture présente une source d'énergie supplémentaire, qui transmet l'énergie au déclencheur (3), où le déclencheur (3) est conçu pour générer le signal de déclenchement lorsqu'il est sous tension.

10. Equipement selon l'une des revendications précédentes, **caractérisé en ce que** le déclencheur (3) adopte ledit second mode en ce sens qu'il assure un accouplement électrique opérationnel de l'antenne avec la mémoire.

11. Equipement selon l'une des revendications précédentes, **caractérisé en ce que** le déclencheur (3) présente comme première partie (3a) un contact disposé au niveau d'un élément à ressort (8) mobile par rapport au dispositif de fixation, en saillie au-dessus du dispositif de fixation, et en guise de seconde partie (3b) un contact prévu dans la plage de mouvement de la première partie (3a).

12. Equipement selon l'une des revendications précédentes, **caractérisé en ce qu'**un évidement (20) est prévu en forme d'oeillet au niveau du dispositif de fixation (20).

13. Procédé de marquage irréversible d'un carcasse à l'aide d'un équipement selon l'une des revendications précédentes, par un mouvement d'au moins l'un de deux éléments d'encliquetage, mobiles l'un par rapport à l'autre, vers une position d'encliquetage irréversible (10, 11) éléments du dispositif de fixation pour assurer la fixation de l'équipement au niveau d'un carcasse, en générant un signal de déclenchement par le déclencheur (3) qui est couplé à l'aide de l'élément de guidage (4) avec le transpondeur (1) et en transmettant le signal de déclenchement au transpondeur (1), alors commuté par le signal de déclenchement vers un mode dans lequel il devient descriptible.

14. Procédé selon la revendication 13, **caractérisé en ce que** le déclencheur est connecté à l'un des éléments d'encliquetage et génère en cas de mouvement d'une moins l'un des éléments d'encliquetage (10, 11) vers la position d'encliquetage irréversible, un accouplement électrique de l'antenne avec la mémoire ou bien **en ce que** le déclencheur présente une section électriquement conductrice d'une conduite de court-circuit pour l'antenne et le déclencheur est détruit en cas de mouvement d'au moins l'un des éléments d'encliquetage (10, 11) vers la position d'encliquetage irréversible, de façon à générer le signal de déclenchement.
